# EUROPEAN PATENT APPLICATION

(11) **EP 2 639 161 A1**
(43) Date of publication of application: **18.09.2013**
(21) Application number: 13159104.2
(22) Date of filing: 14.03.2013
(51) Int. Cl.: B64F 5/00, F16J 15/46, G01M 3/26

(54) **Method for detecting leaks in aircraft wings**

(30) Priority: 16.03.2012 GB 201204653
(71) Applicant: AIRBUS OPERATIONS LIMITED, Filton Bristol Bristol BS99 7AR (GB)
(72) Inventor: Redman, Michael, BRISTOL, BRISTOL BS99 7AR (GB); Tomlinson, David, BRISTOL, BRISTOL BS99 7AR (GB); Waring, Richard, BRISTOL, BRISTOL BS99 7AR (GB)
(74) Representative: Scott, Alistair Francis

(57) **Abstract**

A method is provided for detecting leaks in the wing (2)of an aircraft prior to the fitting of the wing to the rest of the aircraft. A wing sealing assembly (801,802,803,804,805) for sealing the wing (2) of an aircraft so that the wing may be leak-tested is also described.

## Description

The present invention relates to a method for detecting leaks in an aircraft wing, an apparatus for detecting leaks in an aircraft wing and a wing sealing assembly for sealing at least part of a wing to enable leak testing to take place.

It is important for wings of an aircraft to be substantially leak-free. This is especially important for aircraft with fuel tanks in the wings, such as so-called "wet wing" aircraft in which fuel is stored within the wings without use of a bladder or other fuel-containing structure.

The conventional, known method of determining whether a wing is leak-free is now described. The wing is tested prior to attachment of the wing to the rest of the aircraft so that if any leaks are detected, they can be fixed prior to attachment of the wing. A gas (typically a mixture of 5% hydrogen and 95% nitrogen) is introduced into the wing and any leakages detected. In order for leak testing to take place, the inboard part of the wing is sealed at the rib in the wing (sometimes called Rib 2 because when the wing is attached to the aircraft, this rib is the second closest rib to the fuselage). Any apertures in this rib (for example, apertures which are provided in ribs for the passage therethrough of fuel pipes, wiring and the like are sealed. Such apertures are sealed using small bungs and seals, and sealant is typically used to try to block some of the leak paths. Larger apertures (such as the so-called "mouseholes") are sealed using injection moulding techniques, with sealant being used if necessary. The process of sealing all leak paths in the rib can be complicated, time-consuming, messy and expensive. The rib often requires strengthening supports to be used before testing commences. Furthermore, removal of the sealant can be time-consuming and there is a risk of foreign body contamination of the wing (for example, tools being left in the wing).

The method of the present invention seeks to ameliorate one or more of the problems of the prior art method.

In accordance with a first aspect of the present invention, there is provided a method for detecting leaks in an aircraft wing, the method comprising:
(i) Providing an aircraft wing having at one end a wing tip and at the other end a wing root, the wing tip defining an outboard position and the wing root defining an inboard position, and at least one rib disposed between the wing root and wing tip, there being a rib closest to the wing root;
(ii) Forming a gas-tight seal inboard of the rib closest to the wing root;
(iii) Introducing a gas into the aircraft wing; and
(iv) Sensing for leaks in the aircraft wing.

The method of the present invention provides a convenient method for detecting leaks in aircraft wings. The gas-tight seal inboard of the rib closest to the wing root provides an effective way of sealing the inboard part of the wing so that leak-testing of the wing can take place.

For the avoidance of doubt, it should be noted that the wing is unattached to the rest of the aircraft i.e. testing is performed on the wing prior to the wing being attached to the rest of the aircraft.

For the avoidance of doubt, it should be noted that steps (ii) and (iii) do not have to take place in that order. For example, the step of introducing a gas into the aircraft wing may cause the formation of a gas-tight seal.

The method of the present invention may be used to test for the presence of leaks in substantially a whole wing or in a wing compartment, for example a wing compartment defined by upper and lower wing skins and two adjacent spars. Such a compartment may typically extend from the wing tip to the wing root.

The method may comprise forming a seal against one or more wing skins and/or against one or more spars. For example, the method may optionally comprise forming a seal against an inner and/or outer surface of an upper wing skin. Alternatively or additionally, the method may optionally comprise forming a seal against an inner and/or outer surface of a lower wing skin. Alternatively or additionally, the method may comprise forming a seal against an end surface of one or more of the lower wing skin, upper wing skin, first spar and second spar.

Alternatively or additionally, the method may optionally comprise forming a seal against an inner and/or outer surface of a first spar. Alternatively or additionally, the method may optionally comprise forming a seal against an inner and/or outer surface of a second spar.

If the part of the wing to be tested is defined by the upper and lower wing skins and first and second spars, then the inner surface of a spar may be considered to be that surface associated with the part of the wing to be tested and the outer surface of the spar may be considered to be that which is external to the volume or part of the wing to be tested.

For example, the method may optionally comprise forming a seal against one or more surfaces of an upper wing skin, one or more surfaces of a lower wing skin, one or more surfaces of a first spar and one or more surfaces of a second spar. The method may comprise forming a seal on one or more of an outer, an inner and an end surface of the wing.

The method may optionally comprise forming a seal on an outer surface of the wing (but not on the corresponding inner surface of the wing) at a first site on the wing and forming a seal on an inner surface of the wing (but not on the corresponding outer surface of the wing) at a second site on the wing.

Alternatively or additionally, the method may comprise forming a seal on an outer surface of the wing and on the corresponding inner surface of the wing at a first site on the wing and optionally the end of the wing, and forming a seal on one of the inner and outer surfaces of the wing (but not on the corresponding other of the inner and outer surfaces of the wing) at a second site on the wing.

Likewise, optionally, the method may comprise forming a seal on an outer surface of the wing and on the corresponding inner surface of the wing at a first site on the wing and optionally the end of the wing, and forming a seal on the inner surface of the wing (but not on the corresponding outer surface) at a second site on the wing, and forming a seal on the outer surface of the wing (but not on the corresponding inner surface of the wing) at a third site on the wing.

The method may comprise forming a seal only on the inner surface and optionally the end surface of the wing (there being substantially no seal formed on the outer surface of the wing).

The method may comprise forming a seal only on the outer surface and optionally the end surface of the wing (there being substantially no seal on the inner surface of the wing).

The method may optionally comprise forming a seal only on the end surface of the wing (there being substantially no seal on the inner or outer surface of the wing).

The method may optionally comprise forming seals such that there is substantially no portion of the wing on which there is a seal formed on the inner or outer surface, in the absence of a seal formed in the corresponding outer or inner surface.

If the method comprises forming a seal on an inner surface of the wing, the method may comprise providing an abutment surface for contacting an outer surface of the wing. The abutment surface, in use, contacts an outer surface of the wing as a result of the seal being formed on the inner surface. The abutment surface resists the outwards force generated by the positive pressure of gas in the wing and the pressure exerted on formation of the seal. The abutment surface helps decrease the likelihood of leakage at the inner surface of the wing.

Forming a seal may comprise providing a sealing surface and bringing said sealing surface and a surface of the wing into contact with one another so as to form a seal. The method may comprise providing a sealing surface, and urging said sealing surface into contact with a surface of the wing. Urging said sealing surface into contact with a surface of the wing may be performed, for example, by providing gas, typically a positive pressure of gas. The sealing surface may be movable between a non-sealing position and a sealing position. The sealing surface may optionally be moved from a non-sealing position to a sealing position using gas (preferably a positive pressure of gas). Alternatively and additionally, the sealing surface may be retained in the non-sealing position using a negative pressure, and release of said negative pressure causes the sealing surface to be urged into contact with a surface of the wing. The step of forming a seal may comprise providing a seal member providing at least one sealing surface and a gas inlet for the introduction of gas for moving the at least one sealing surface into contact with a surface of the wing. The seal member may comprise an elastically-deformable material, such as neoprene. A seal member support may be provided for supporting the seal member. The seal member support and seal member optionally provide a gas-tight region for the introduction of gas. The seal member carrier may typically be substantially rigid because such a carrier will not deform when gas is introduced between the seal member and seal member carrier.

Optionally, a seal may be formed with an outer surface of the wing using such a seal member.

Optionally, a seal may be formed with an inner surface of the wing using such a seal member. Such an arrangement may be beneficial because there may be less stress applied to the wing than is experienced when a seal is formed from such a seal member with an outer surface of the wing.

Optionally, a seal may be formed with an inner surface of the wing and with an outer surface of the wing using one or more such seal members.

Optionally, a seal may be formed with an end surface of the wing using such a seal member.

The method may comprise providing a sealing surface and a means for urging the sealing surface into contact with a surface of the wing.

The means for urging the sealing surface into contact with the wing may comprise an inflatable chamber, for example.

Forming a seal may comprise providing an inflatable chamber and inflating said chamber, inflation of said chamber causing the formation of said seal. The inflatable chamber is typically associated with one or more sealing surfaces, inflation of the chamber causing one or more of the sealing surfaces to contact a surface of the wing, thereby forming a seal. One possible advantage of an inflatable chamber is that accuracy of positioning of the chamber relative to the wing is not critically important, since the chamber inflates to meet the surface of the wing. A seal may be formed using an inflatable chamber on one or more of the inner, outer and end surfaces of the wing.

Optionally, a seal may be formed with an outer surface of the wing using such an inflatable chamber. Optionally, a seal may be formed with an inner surface of the wing using such an inflatable chamber. Such an arrangement may be beneficial because there may be less stress applied to the wing than is experienced when a seal is formed from such an inflatable chamber with an outer surface of the wing.

Optionally, a seal may be formed with an inner surface of the wing and with an outer surface of the wing using one or more inflatable chambers. One chamber may be used to form both seals, or optionally a first chamber is used to form the seal with the inner surface and a second chamber is used to form the seal with the outer surface.

Optionally, a seal may be formed with an end surface of the wing using such an inflatable chamber.

The method may comprise providing a sealing surface and a means of urging the sealing surface into contact with a surface of the wing, and operating the means for urging the sealing surface into contact with a surface of the wing. The method may comprise providing an abutment surface in proximity to a surface of the wing. Operating the means for urging the sealing surface into contact with a surface of the wing urges another surface of the wing into contact with the abutment surface. For example, if the sealing surface, in use, abuts the inner surface of the wing, operating the means for urging the sealing surface into contact with a surface may urge the outer surface of the wing into contact with the abutment surface. The abutment surface may be located externally or internally of said wing root.

The method may comprise providing each of the interior and exterior of the wing root portion with a sealing surface and a means of urging the respective sealing surface into contact with an inner or outer surface of the wing, and operating the means for urging the sealing surface into contact with an inner or outer surface respectively of the wing. In this way, a seal may be formed on both the inner and outer surface of the wing.

The means of urging the sealing surface into contact with an inner or outer surface of the aircraft may comprise an inflatable chamber. The operation of such an inflatable chamber is described above.

The sealing surface and optionally, if present, the means for urging the sealing surface into contact with a surface of the aircraft and optionally, if present, the gas inlet for the introduction of gas for moving the at least one sealing surface into contract with a surface of the wing may be provided by a wing sealing assembly. The wing sealing assembly may comprise a support for the sealing surface. The wing sealing assembly may optionally comprise a seal member comprising the seating surface, the sealing surface being movable between a sealing position and a non-sealing position using gas.

The method may comprise bringing together the wing sealing assembly and the wing, and securing the wing sealing assembly and wing together. Bringing together the wing sealing assembly and the wing may be performed using one or more of a robot, a gimbal mount, a hexapod and a pulley. Securing the wing and wing sealing assembly may be performed using one or more of a robot, a hexapod, a fixed and immovable support, and a vacuum. For example, a vacuum may be used to secure the wing sealing assembly to the wing.

Detecting leaks in the aircraft wing may comprise one or more of sensing gas pressure within the wing, sensing gas flow within the wing, sensing gas flow external to the wing (but typically adjacent to the wing) and sensing for the presence of said gas external to the wing (for example, by using a sensor or detector which senses or detects said particular gas). For example, if the gas used to pressurise the wing is not a gas usually found in the ambient atmosphere, the presence of said gas in the atmosphere external to the wing would indicate a leak in the wing. Alternatively, if the gas used to pressurise the wing is a gas usually found in the atmosphere, the presence of a higher concentration than usual of said gas external to the wing would be indicative of a leak in the wing.

Detecting for leaks may comprise sensing using one or more mobile detectors or sensors. Alternatively or additionally, detecting for leaks may comprise sensing using one or more static detectors or sensors.

Said gas used in the method of the present invention is optionally an inert gas, such as helium or nitrogen. Sensors for the detection of helium are well-known to those skilled in the art of leak detection.

There is provided in accordance with a second aspect of the present invention, a wing sealing assembly for forming a seal at the wing root of a wing, the assembly comprising a first seal member comprising a first sealing surface for sealing against a surface of the wing, the first sealing surface being movable between a sealing position and a non-sealing position, the first sealing surface being movable from the non-sealing position to the sealing position by gas.

The wing sealing assembly may comprise a means for urging the first sealing surface into contact with a surface of the wing.

The seal formed is typically gas-tight so that a wing to which the wing sealing assembly is attached may be leak-tested. For example, the wing sealing assembly may provide a gas tight seal around the exterior surface of a wing at a wing root in order that the wing may be leak tested. Alternatively and additionally, the wing sealing assembly may provide a gas tight seal at the interior surface of a wing at a wing root so that the wing can be leak tested.

The wing sealing assembly may comprise an abutment surface for contacting a surface of the wing on urging the first sealing surface into the sealing position.

The wing sealing assembly may comprise a support for the seal member. The support for the seal member and the seal member may define a gas-tight region into which gas may be introduced or from which gas may be removed. The support may be in the form of a shell, the first seal member optionally being located within the shell. The shell may define an aperture for the receipt of the inboard part of an aircraft wing.

Alternatively or additionally, the wing sealing assembly may comprise an inflatable chamber, inflatable to urge the first sealing surface into contact with a surface of the wing. The inflatable chamber may be any suitable shape. The inflatable chamber may, in use, extend around the perimeter of the wing root. Alternatively or additionally, the inflatable chamber may be associated with one portion of a surface of the wing. For example, the wing sealing assembly may comprise a plurality of inflatable chambers, each associated with a portion of sealing surface.

The first sealing surface may optionally be arranged for forming a seal against the inner or outer surface of a wing.

The wing sealing assembly optionally comprises a second sealing surface for sealing against a surface of the wing. Optionally, the second sealing surface is for sealing against the other of the outer or inner surface of the wing not sealed against by the first sealing surface. The second sealing surface may be provided by a seal member, optionally the first seal member, optionally by a second seal member The second sealing surface may be arranged to be urged into engagement with a surface of the wing by gas.

Alternatively or additionally, the wing sealing assembly may comprise a means for urging the second sealing surface into contact with a surface of the wing which is different from that used to urge the first sealing surface into contact with a surface of the aircraft. This means for urging the second sealing surface into contact with a surface of the wing may comprise an inflatable chamber, inflatable to urge the second sealing surface into contact with a surface of the wing. The inflatable chamber may be any suitable shape.

The first sealing surface may be arranged to form a seal at a first part of the wing. The second sealing surface may be arranged to form a seal at a different part of the wing and/or the same part of the wing. For example, the first sealing surface may be arranged to form a seal against an inner surface of the wing at one part of the wing and the second sealing surface may be arranged to form a seal against the outer surface of the wing opposite the first sealing surface.

The wing sealing assembly of the second aspect of the present invention may be used in the method of the first aspect of the present invention. Therefore, if a wing sealing assembly is used in the method of the first aspect of the present invention, then that wing sealing assembly may incorporate the features of the wing sealing assembly of the second aspect of the present invention.

There is provided in accordance with a third aspect of the present invention, an apparatus for detecting leaks in an aircraft wing, the apparatus comprising a wing sealing assembly in accordance with the second aspect of the present invention and at least one sensor for sensing leakage of gas from an aircraft wing.

The apparatus of the third aspect of the present invention may be used in the method of the first aspect of the present invention.

The method of the first aspect of the present invention, the wing sealing assembly of the second aspect of the present invention and the apparatus of the third aspect of the present invention are of greater application to larger aircraft. In this connection, the aircraft is preferably heavier than 40 tonnes zero fuel weight, and more preferably heavier than 50 tonnes zero fuel weight. The aircraft is preferably of a size equivalent to an aircraft designed to carry more than 75 passengers, and more preferably more than 100 passengers. The aircraft may optionally have a wingspan of at least 25m and optionally of at least 30m. The length of the leading edge of the wing may optionally be at least 10m and optionally at least 15m.

The present invention will now be described by way of example only with reference to the following figures of which:
Figure 1 is a perspective view of the inboard end of a wing showing a conventional arrangement of rib seals provided for leak testing;
Figure 2 is a schematic perspective sectional view of an example of a sealing arrangement used in an example of a method in accordance with the present invention;
Figure 3 is a schematic perspective sectional view of an alternative example of an arrangement used in an example of a method in accordance with the present invention;
Figure 4 is a schematic perspective sectional view of a further alternative example of an arrangement used in an example of a method in accordance with the present invention;
Figure 5 is a perspective view of a fixed support used to secure a sealing arrangement in place for leak testing;
Figure 6 is a perspective view of a vacuum clamping arrangement used to secure a sealing arrangement in place for leak testing;
Figure 7 is a schematic, exploded perspective view of an example of a wing sealing assembly in accordance with the present invention;
Figure 8a is a cross-sectional view of the wing sealing assembly of Fig. 7 in use on a wing with the seal member in a non-sealing, retracted position;
Figure 8b is a cross-sectional view of the wing of the wing sealing assembly of Fig 7 in use on a wing with the seal member in a sealing position; and
Figure 9 is a perspective view of the sealing arrangement of Figure 2 being moved into position using a hexapod (six-axis positioner).

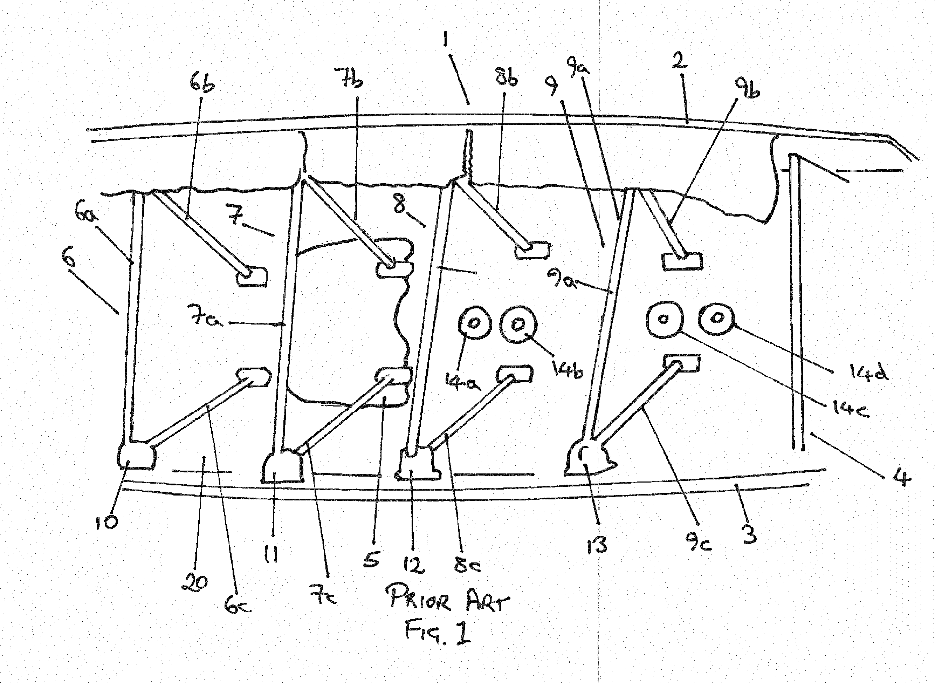

A known method of testing a wing for the presence of leaks will now be described with reference to Figure 1 Figure 1 shows part of a wing which is to be tested. The wing is denoted generally by reference numeral 1 and comprises an upper skin 2 spaced apart from a lower skin 3. The wing comprises a plurality of ribs (only one of which 20 is shown in Fig. 1) spaced apart along the length of the wing. The wing also comprises spars (only one of which 4 is shown) running along the length of the wing. The wing also comprises other conventional features (such as stringers) which have been omitted for the purpose of clarity. In order to leak-test such a wing, it is conventional to make the wing leak-tight at the rib which is accessible from the inboard end of the wing. This rib is labelled 20 in Fig. 1, and is known in some aircraft as Rib 2 because, once the wing is attached to an aircraft, it is the rib which is second closest to the fuselage. In the conventional method, all of the small holes present in rib 20 are sealed in order to make the rib 20 leak-free. This involves, inter alia, inserting sealing members 14a, 14b, 14c, 14d into small holes present in the rib 20. Hot-melt sealant (not shown) is typically provided between the sealing members and the periphery of the apertures in the rib 20 to ensure a good seal. Larger holes (not shown) in the rib 20 may be provided with larger bungs, such as bung 5 which is used to fill a so-called "mouse hole" in rib 20. Hot-melt sealant is used to ensure a leak-free sealing of the mouse-hole. Any apertures in the rib 20 which are too small to receive a sealing member such as those labelled 14a, 14b, 14c, 14d are filled with plasticine or hot-melt sealant. The rib 20 is supported by a plurality of support arrangements, several of which are shown (6, 7, 8, 9). Support arrangement 6 comprises three bracing members (6a, 6b, 6c). Bracing member 6a is attached to the top and bottom skins using brackets, one of which is shown (10). Bracing members 6b, 6c engage a strengthening beam (not shown) which is placed across the rib 20. Likewise, each support arrangement 7, 8, 9 comprises three bracing members (7a, 7b, 7c; 8a, 8b, 8c; 9a, 9b, 9c), and each bracing member 7a, 8a, 9a is attached to the top and bottom skins using brackets, of which only the bottom ones (11, 12, 13) are shown. Bracing members 7b, 7c, 8b, 8c, 9b, 9c engage a strengthening beam (not shown) which is placed across the rib 20. The strengthening beam helps support the rib.

Once the rib 20 has been sealed, leak-testing may take place, as is well-known to those skilled in the art. A test gas (such as a mixture of 5% hydrogen and 95% nitrogen) is introduced into wing 1 and several operators use "sniffing" devices (such as a Sensistor H2000 hydrogen scanner) to determine whether any test gas leaks from the wing.

This known method is labour-intensive and time-consuming, not least because of the many components required. The application of sealant is time consuming and sealant has to be removed once testing is complete. Furthermore, a support structure is required for the rib to ensure that it is not damaged by the pressures generated during testing. There is also a risk that tools or other components can be left inside the wing after testing.

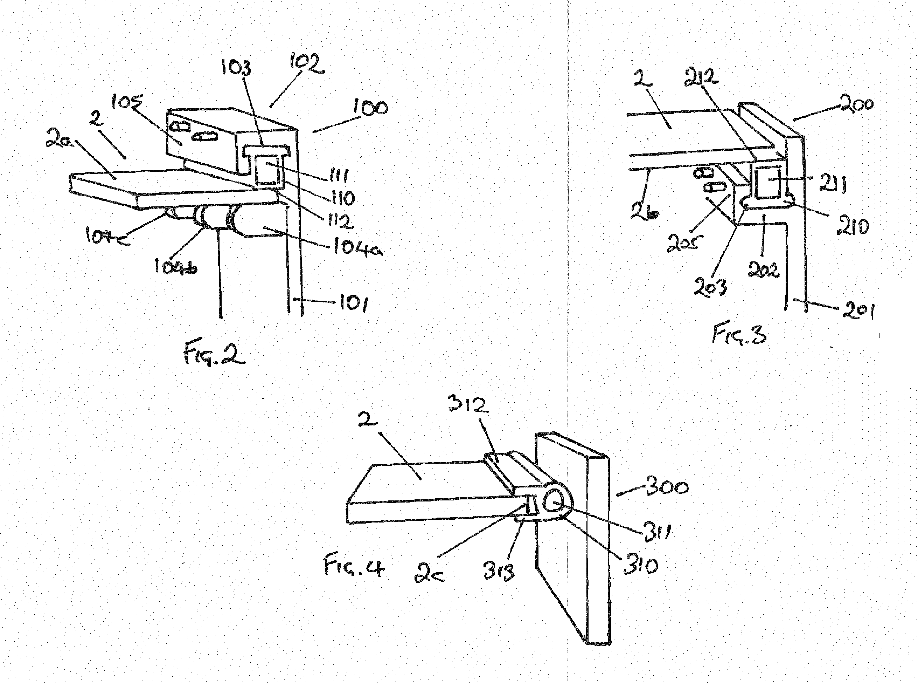

An embodiment of an example of a method in accordance with the present invention will now be described with reference to Figure 2. Figure 2 shows a perspective cross-sectional view through part of a seal formed at the inboard end of the wing for an aircraft. The aircraft for which the wing is made in the present case is an Airbus® A320®. A seal is formed between the outer surface 2a of upper skin 2 and sealing surface 112. Sealing surface 112 is part of a sealing means 110. Sealing means 110 is provided with an inflatable chamber 111. The chamber 111 is inflated using an external gas source (not shown). Inflation of the chamber 111 urges sealing surface 112 into sealing contact with outer surface 2a of upper skin 2 of the aircraft wing. Inflation of the chamber 111 also urges the upper skin 2 into contact with supporting members 104a, 104b, 104c. This arrangement may be particularly effective because introduction of gas into the wing causes upper skin 2 to be urged upwards and therefore urges upper surface 2a into engagement with sealing surface 112. Sealing means 110 is held in place by virtue of flanges (not labelled) which are located in a slot 103 in support 100. Support 100 comprises an inwardly projecting lip 105 which, together with a front portion 101 and edge portion 102 defines a space for the receipt of the sealing means 110. The sealing means 110 is shaped to extend around the periphery of the part of the wing that is to be sealed. For example, the sealing means 110 may be shaped to go around the perimeter of the whole of the inboard end of the wing. Alternatively, the sealing means 110 may be shaped to go around the upper skin and lower skin between two adjacent wing spars, and around the wing spars. The sealing means may be, for example, a Nufox® inflatable seal (Nufox Ltd., Manchester, UK) or a Trelleborg inflatable seal (Trelleborg Sealing Solutions, Trelleborg, Sweden).

The use of the sealing arrangement described above will now be described. The sealing means 110 must be in a deflated state prior to presenting the sealing arrangement to the wing. The sealing arrangement is presented against the wing and the inflatable chamber 111 inflated. This results in the sealing engagement of the sealing surface 112 with the outer surface 2a of the wing.

An alternative example of a sealing arrangement which may be used in a method of the present invention is now described with reference to Fig. 3. As in Fig. 2, an inflatable chamber 211 is used to urge a sealing surface 212 into sealing contact with a surface of a wing skin 2. In contrast to the arrangement of Fig. 2, in Fig. 3 the sealing surface 212 is urged into sealing contact with the inner surface 2b (as opposed to the outer surface 2a) of the wing skin. As in Fig. 2, a support 200 is provided, which provides a slot 203 for the seating of the inflatable seal means 210. In the example of Fig. 3, the slot 203 is defined by an outwardly-projecting lip 205, an outer carrier portion 201 and a carrier base portion 202. Optionally, the support 200 may comprise an upper lip (not shown) which extends across the edge of the upper skin 2 so that inflation of the inflatable chamber 211 urges the upper surface 2a of the skin into contact with the underside of the upper lip.

A further alternative example of a sealing arrangement which may be used in a method of the present invention is now described with reference to Fig. 4. The sealing arrangement comprises a sealing means 310 which comprises an inflatable chamber 311. The inflatable chamber 311 is essentially circular in cross-section, and expands on inflation to sealingly engage with the end surface 2c of wing skin 2. The sealing means 310 is also provided with lips 312, 313 which frictionally engage with the outer and inner surfaces respectively of the wing skin 2. Such frictional engagement may also provide a seal on one or both of the upper and lower wing skin surfaces.

In order to obtain a satisfactory seal around the perimeter of the inboard portion of a wing, it may be desirable to use the sealing arrangement of Fig. 2 on one part of the wing and that of Fig. 3 on another part of the wing. For example, certain parts of the wing may comprise features which inhibit seal formation on the inner surface of the wing, and in such cases, it would be preferred to form a seal on the outer surface of the wing. Likewise, certain parts of the wing may comprise features on the outer surface (for example, on the outer surface of a spar) which inhibits seal formation on that outer surface, and in such cases it would be beneficial to form a seal on the inner surface of the wing features.

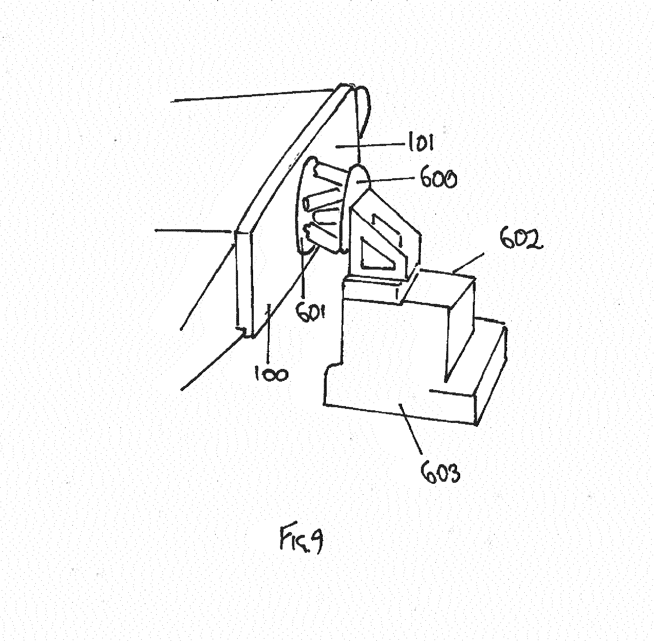

There are several ways in which a sealing arrangement described above in relation to Figures 2 to 4 may be presented to the wing of an aircraft, and one of these is now described with reference to Fig. 9. The support 100, along with the sealing means 110 is attached to a hexapod (a six-axis positioning device, denoted generally by reference numeral 600) by attachment plate 601. The hexapod 600 is used to change the orientation of the support 100 with respect to the aperture in the inboard part of the wing so that the carrier can be inserted onto the end of the wing. The hexapod is mounted onto a translational stage 602 which moves the hexapod and support 100 towards and away from the wing. The translational stage 602 is mounted on a platform 603.

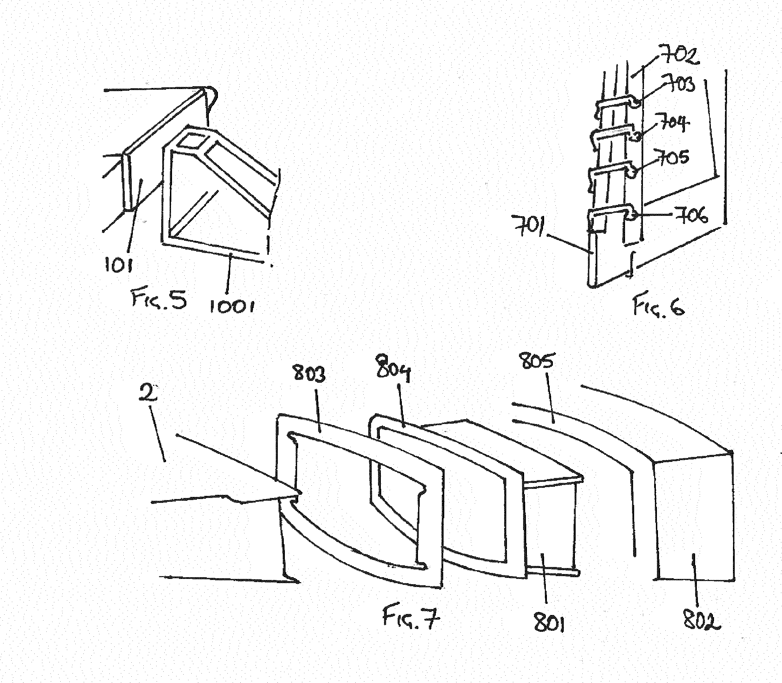

Once the support 100 is in place, the hexapod 600 may be detached from the support 100. The support 100 may be retained in position in several ways. Firstly, referring to Figure 5, a fixed frame may be used. A frame 1001 is brought into engagement with the support 100, and the frame attached to the support. The frame is then bolted or otherwise fixed to the floor. The fixing of the frame to the floor ensures that the support is fixed in place relative to the wing.

An alternative arrangement for retaining the support 100 in place relative to the wing will now be described with reference to Figure 6. A backing plate 701 is placed against the support 100. Clamping members are provided on the top and bottom skins (upper clamping member 702 being visible in Fig. 6). The side of clamping members which contacts the wing is provided with channels (not shown) which are attached to a vacuum pump (not shown) via arms 703, 704, 705, 706. The application of a vacuum produces a clamping action which maintains support 100 in place relative to the wing.

Once the sealing arrangement is held in place, the inflatable sealing chamber is inflated to urge the sealing surface into engagement with the respective aircraft surface. Once this has taken place, the wing may be filled with test gas and leak-testing may then take place by sensing for the presence of the test gas in the atmosphere surrounding the wing.

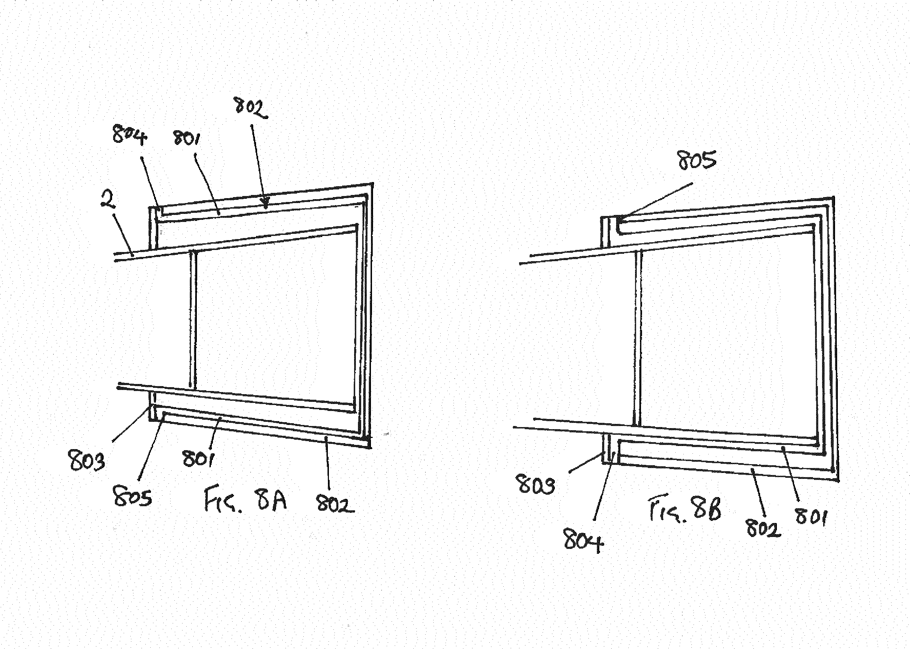

A further sealing arrangement is described below with reference to Figs. 7, 8a and 8b. The sealing arrangement comprises a seal member 801, a cap member 802 and a clamping ring 803. Bolts (not shown) extend through the clamping ring, through apertures in a flange 804 in the seal member into end face 805 of the cap member 802. The bolts engage with screw threads provided in end face 805 so that the seal member 801 may be clamped to the cap member 802. The seal members 801 and cap member 802 are, in use, placed around the open inboard end of the wing. In order to facilitate placement of the seal member 801 around the wing, the seal member is, initially, in a retracted state in which the seal member is drawn-in against the cap member 802 (Fig. 8a). This may be achieved, for example, by removing air/gas from the gas-tight region between the seal member 801 and the cap member 802 using a vacuum pump. The end of the wing fits inside the seal member 801 and cap members 802. Gas is introduced between the seal member 801 and cap member 802, urging the seal member 801 into sealing contact with the external surface of the end of the wing (Fig. 8b). After sealing contact has been established around the whole exterior surface of the inboard end of the wing by the sealing member, leak testing takes place. The seal member 801 is made of neoprene, but may be made from any other suitable material. The cap member 802 is made from steel, but any other suitable, substantially-rigid material may be used.

The Example above demonstrates the use of a hexapod to position the sealing arrangement relative to the wing. There are several alternative ways in which the sealing arrangement may be presented to the aircraft wing, such as the use of a robot, a set of gimbal mounts or a manual handling trolley.

The Example above demonstrates the use of a fixed support or a clamped plate arrangement to retrain the sealing arrangement in place. Other arrangements may be used, such as a robot.

The Examples above all relate to the formation of a seal which is formed using a positive gas pressure. Other arrangements for urging a sealing surface into sealing contact with a wing surface may be used. For example, a sealing surface may be associated with a biasing means, operable to urge the sealing surface into sealing engagement with a wing surface. The biasing means may be a spring, for example, which may be "latched" in a retracted position in which the sealing surface is not urged into contact with a wing surface, and then "unlatched" to urge the sealing surface into sealing contact with the wing surface when required.

The Examples above all relate to the use, at any particular place on the wing, of a seal which surrounds the outer surface of a wing. Alternatively or additionally, it may be desirable to form a seal on another surface of the wing (say, the inner surface).

The Examples above all relate to the use of seals which are formed using a positive gas pressure. As indicated above, these are beneficial in that the sealing surface may conform to the geometry of the wing and therefore the geometry of the sealing surface does not have to be precisely defined in relating to the surface it is to seal. However, the method of the present invention does not require such a sealing arrangement. For example, the inflatable seal of Figure 2 may be replaced by a non-expandable sealing member, the geometry of which has been defined quite precisely to match that of the wing it is to seal. Most of the Examples above relate to the formation of a seal between the inner or outer surface of the wing with a corresponding sealing surface. It may be desirable for the inboard end surfaces of the wing to be brought into sealing engagement with a support, such as that labelled 100 in Fig. 2.

There are many different ways in which leaks could be monitored. For example, leaks may be monitored manually using one or more operators. Alternatively or additionally, one or more static sensors may be used. Alternatively or additionally, one of more automated movable sensors could be uses.

Where, in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims.

## Claims

1. A method for detecting leaks in an aircraft wing, the method comprising:
(i) Providing an aircraft wing having at one end a wing tip and at the other end a wing root, the wing tip defining an outboard position and the wing root defining an inboard position, and at least one rib disposed between the wing root and wing tip, there being a rib closest to the wing root;
(ii) Forming a gas-tight seal inboard of the rib closest to the wing root;
(iii) Introducing a gas into the aircraft wing; and
(iv) Sensing for leaks in the aircraft wing.

2. A method according to claim 1 wherein the step of introducing a gas into the aircraft wing causes the formation of a gas-tight seal.

3. A method according to claim 1 or claim 2 comprising forming a seal against one or more wing skins and/or against one or more spars.

4. A method according to any preceding claim comprising forming a seal on an outer surface of the wing (but not on the corresponding inner surface of the wing) at a first site on the wing and forming a seal on an inner surface of the wing (but not on the corresponding outer surface of the wing) at a second site on the wing.

5. A method according to any preceding claim comprising forming a seal on an outer surface of the wing and on the corresponding inner surface of the wing at a first site on the wing and optionally the end of the wing, and forming a seal on one of the inner and outer surfaces of the wing (but not on the corresponding other of the inner and outer surfaces of the wing) at a second site on the wing.

6. A method according to any preceding claim comprising forming a seal on an outer surface of the wing and on the corresponding inner surface of the wing at a first site on the wing and optionally the end of the wing, and forming a seal on the inner surface of the wing (but not on the corresponding outer surface) at a second site on the wing, and forming a seal on the outer surface of the wing (but not on the corresponding inner surface of the wing) at a third site on the wing.

7. A method according to any of claims 1 to 3 comprising (a) forming a seal only on the inner surface and optionally the end surface of the wing (there being substantially no seal formed on the outer surface of the wing), (b) forming a seal only on the outer surface and optionally the end surface of the wing (there being substantially no seal on the inner surface of the wing), or (c) forming a seal only on the end surface of the wing (there being substantially no seal on the inner or outer surface of the wing)..

8. A method according to any of claims 1 to 7 wherein a seal is formed on an inner surface of the wing, the method comprising providing an abutment surface for contacting an outer surface of the wing, the abutment surface, in use, contacting an outer surface of the wing as a result of the seal being formed on the inner surface.

9. A method according to any preceding claim comprising providing a sealing surface and urging said sealing surface into contact with a surface of the wing so as to form a seal.

10. A method according to claim 9 wherein urging said sealing surface into contact with a surface of the wing may be performed by providing gas.

11. A method according to claim 9 or claim 10, a seal being formed with an outer surface of the wing, an inner surface of the wing or an end surface of the wing using an inflatable chamber.

12. A method according to claim 9 or claim 10, a seal being formed with an inner surface of the wing and with an outer surface of the wing using one or more inflatable chambers.

13. A method according to claim 9 or claim 10 comprising providing a sealing surface and a means of urging the sealing surface into contact with a surface of the wing, and operating the means for urging the sealing surface into contact with a surface of the wing, wherein the sealing surface and the means for urging the sealing surface into contact with a surface of the aircraft are provided by a wing sealing assembly.

14. A method according to claim 13 comprising bringing together the wing sealing assembly and the wing using one or more of a robot, a gimbal mount, a hexapod and a pulley, and securing the wing sealing assembly and wing together.

15. A wing sealing assembly for forming a seal at the wing root of a wing, the assembly comprising a first seal member comprising a first sealing surface for sealing against a surface of the wing, the first sealing surface being movable between a sealing position and a non-sealing position, the first sealing surface being movable from the non-sealing position to the sealing position by gas.

16. An apparatus for detecting leaks in an aircraft wing, the apparatus comprising a wing sealing assembly according to claim 15 and at least one sensor for sensing leakage of gas from an aircraft wing.
